Europäisches Patentamt

European Patent Office

Office européen des brevets

(19)

(11) Veröffentlichungsnummer : **0 070 958**
**B1**

(12) **EUROPÄISCHE PATENTSCHRIFT**

(45) Veröffentlichungstag der Patentschrift :
21.11.85

(21) Anmeldenummer : 82101537.7

(22) Anmeldetag : 27.02.82

(51) Int. Cl.⁴ : **H 01 M 10/39, H 01 M 6/18,
H 01 M 4/80**

(54) **Galvanisches Element mit einem porösen, die Kathodensubstanzen enthaltenden Festkörperelektrolyt-Sintergerüst.**

(30) Priorität : 28.07.81 DE 3129679

(43) Veröffentlichungstag der Anmeldung :
09.02.83 Patentblatt 83/06

(45) Bekanntmachung des Hinweises auf die Patenterteilung : 21.11.85 Patentblatt 85/47

(84) Benannte Vertragsstaaten :
DE FR GB

(56) Entgegenhaltungen :
DE-A- 1 471 794
DE-A- 2 754 454
FR-A- 2 085 994
US-A- 3 953 231
US-A- 4 012 563
US-A- 4 135 040

(73) Patentinhaber : VARTA Batterie Aktiengesellschaft
Am Leineufer 51
D-3000 Hannover 21 (DE)

(72) Erfinder : **Bittihn, Rainer**
Königsberger Strasse 34
D-6233 Kelkheim (DE)
Erfinder : **Eren, Yalcin**
Berliner Ring 7
D-6233 Kelkheim (DE)

(74) Vertreter : **Kaiser, Dieter Ralf, Dipl.-Ing.**
Gundelhardtstrasse 72
D-6233 Kelkheim/Ts. (DE)

**Beschreibung**

Die Erfindung betrifft ein galvanisches Element mit einem Festkörperelektrolyten, einer negativen Alkalimetallelektrode und einer positiven Elektrode.

Das Anwendungsgebiet der Erfindung erstreckt sich sowohl auf reine Festkörperzellen, bei denen alle an der Stromlieferung beteiligten aktiven Bestandteile in fester Form vorliegen, als auch auf Elemente vom Typ der Na/S-Zelle, deren Elektroden während des Betriebes flüssig sind.

Gegenüber herkömmlichen Zellen mit flüssigen Elektrolyten und porösen festen Elektroden haben insbesondere die erstgenannten Festkörperzellen den Nachteil, daß Festkörperelektrolyt und Kathodenkörper nur über ihre geometrische Kontaktfläche miteinander in Wechselwirkung treten können, wobei dieser Kontakt für den elektrochemischen Umsatz bei verstärkter Strombelastung nicht ausreicht. Aber auch bei Natrium/Schwefel-Zellen, bei denen ein dichtes keramisches Material wie Na-$\beta$-Alumina als Separator die beiden flüssigen Reaktionspartner voneinander trennt, gilt der eben erwähnte Nachteil zumindest für die Seite des Schwefels. Während nämlich die Keramik wegen ihres natriumionenleitenden Charakters für das Natrium transparent ist, wirkt sie gegenüber den viel größeren Schwefelatomen als Sperre mit dem Erfolg, daß die stromliefernde Reaktion nur an der Grenzfläche Festkörperelektrolyt-Separator/Kathode ablaufen kann und damit auf die geometrische Festkörperfläche beschränkt ist.

Bei Flüssigkeitszellen hingegen durchdringt der Elektrolyt die Hohlräume des entsprechend präparierten Elektrodenmaterials und zieht auf diese Weise einen erheblichen Teil der inneren Elektrodenfläche, soweit sie nicht auf geschlossene Poren entfällt, zusätzlich zur Stromlieferung heran. Die Masseausbeute wird dadurch auf ein Optimum gebracht.

Man hat aus diesem Grunde bereits versucht, die Durchdringung der porösen Elektrodensubstanz mit dem Elektrolyten bei Flüssigkeitszellen als Modell auf Festkörperzellen zu übertragen, indem man durch Zumischen von Festelektrolytpulver zur Kathodensubstanz eine innige Verzahnung von Elektrolyt und Elektrode herbeizuführen suchte.

Eine solche Maßnahme konnte jedoch nicht voll befriedigen, weil zwischen den einzelnen Partikeln lediglich Punktkontakte geschaffen wurden, die einer hohen Belastbarkeit entgegenstehen. Auch ist nicht immer die Voraussetzung erfüllt, daß Elektrolyt- und Elektrodenmaterial in feinstkörniger Verteilung nicht chemisch miteinander reagieren, d. h. miteinander kompatibel sind.

Ein anderer Weg, zu einer elektrolytdurchsetzten Festkörperelektrode durch Präparation eines schwammartig strukturierten Elektrodenkörpers zu gelangen, in den dann die Elektrolytkomponente bei höheren Temperaturen in schmelzflüssigem Zustand eingeträkt wird, blieb wegen der hohen Schmelztemperatur bekannter Festkörperelektrolyte versperrt.

Der Erfindung liegt daher die Aufgabe zugrunde, ein galvanisches Element mit einem Festkörperelektrolyten verfügbar zu machen, deren Elektroden, in fester oder auch flüssiger Form vorliegend, gegenüber dem Feskörperelektrolyten eine gute thermodynamische Stabilität besitzen und zugleich einer hohen Strombelastung gewachsen sind.

Zur Lösung dieser Aufgabe wird eine Zelle der eingangs genannten Art vorgeschlagen, die erfindungsgemäß das im kennzeichnenden Teil des Patentanspruchs 1 genannte Merkmal aufweist.

Danach ist es möglich, das aktive Elektrodenmaterial mit Hilfe einer in sich kohärenten, offenen Struktur aus Festkörperelektrolyt zu durchdringen und einen so intensiven Kontakt zwischen den stromerzeugenden Komponenten herzustellen, wie hohe Masseausnutzung und ein guter Leitungsquerschnitt für hohe Strombelastbarkeit es erfordern.

In einer vorzugsweisen Ausführung der erfindungsgemäßen Festkörperzelle ist zumindest die positive Elektrode mit einem Festkörperelektrolyt-Sintergerüst versehen.

Eine besonders vorteilhafte Festkörperzelle gemäß der Erfindung ist so ausgebildet, daß dem porösen Sintergerüst, welchem beispielsweise ein Mischkristall aus den Komponenten des quaternären Systems $Na_2O$—$ZrO_2$—$SiO_2$—$P_2O_5$ zugrundeliegt, ein nichtporöses Material der gleichen Zusammensetzung als Festelektrolytseparator homogen angesintert ist. In diesem Fall liegt ein Compoundteil vor, mit dem die separate Präparation von Festelektrolytseparator und Elektrodengerüst vorteilhaft umgangen werden kann, weil durch das nachträgliche Aufeinanderpressen der Einzelteile wiederum nur Punktkontakte mit unzureichender Stromleitung entstehen würden.

Als Festkörperelektrolyte in der erfindungsgemäßen Festkörperzelle sind aber auch $Li_2O \cdot 11$ $Al_2O_3$ (Li-$\beta$-Alumina) $Na_2O \cdot 11$ $Al_2O_3$ (Na-$\beta$-Alumina) oder $Li_3N$ einsetzbar.

Zur Herstellung des porösen Festelektrolytgerüstkörpers werden erfindungsgemäß 40 Vol.Tle feinkörniges Festelektrolytmaterial mit 60 Vol.Tln feingemahlener Fillersubstanz auf Kohlenstoffbasis gemischt und verpreßt. Als Fillersubstanzen sind beispielsweise Graphit, Holzkohle, Holzmehl oder Speisemehl geeignet, wobei letzterem wegen der damit erzielbaren besonders günstigen, weil kleinen Porengröße und Porenverteilung der Vorzug zu geben ist.

Durch etwa 3-stündiges Sintern des Preßlings bei 1 250 °C im Falle des oben genannten quaternären Systems $Na_2O$—$ZrO_2$—$SiO_2$—$P_2O_5$ in offener Atmosphäre wird, nachdem die Fillersubstanzen bereits bei niedrigeren Temperaturen als gasförmiges $CO_2$ entwichen sind, ein formstabiler poröser Festelektrolytkörper erhalten.

In einer bevorzugten Abwandlung dieses Verfahrens wird der poröse Gerüstkörper mit massivem Festkörperelektrolyt, der in der Zelle quasi den « Festkörperelektrolytseparator » bildet, zu einem einheitlichen Compoundteil vereinigt. Hierzu werden zwei Schüttungen aus reinem Festkörperelektrolytmaterial und aus Festkörperelektrolyt-Filler-Mischung sorgfältig übereinander geschichtet, verpreßt und gesintert. In diesem Fall ist jedoch zu beachten, daß eine unterschiedliche Sinterschrumpfung der einzelnen Komponenten auftreten kann. Der fillerhaltige Teil schrumpft eventuell während des Sinterns — bedingt auch durch das Entweichen der Kohlenstoffverbindung — stärker als der massive Separatorkörper. Erfindungsgemäß läßt sich dieser Tendenz dadurch entgegenwirken, daß man während der Aufheiz- und Abkühlphase des Sinterprozesses die Temperatur entsprechend langsam ändert mit dem Erfolg, daß die Sinterung im wesentlichen bereits stattgefunden hat, wenn die Kohlenstoffverbindung noch anwesend ist und demgemäß erst in dem höheren Temperaturbereich des Fertigsinterns verdampft. Auf diese Weise werden Compoundkörper erhalten, dessen Formteile in innigem Kontakt miteinander versintert sind und keinen Phasenübergang zwischen sich aufweisen.

Der eben beschriebene Compoundkörper kann erfindungsgemäß auch dahin abgewandelt werden, daß dem massiven Festkörperelektrolytseparator beidseitig ein poröses Festkörperelektrolytgerüst aufgesintert ist. Dies geschieht über die Herstellung eines entsprechenden dreischichtigen Preßlings, dessen mittlere Schicht von dem reinen, d. h. fillerfreien Festkörperelektrolytmaterial gebildet ist. Auf diese Weise läßt sich eine nahezu komplette Zellenstruktur erhalten mit einem präformierten Kathoden- und Anodenraum, die nur noch mit den entsprechenden aktiven Materialien angefüllt werden müssen.

Die pyknometrische Dichte $\rho_P$ eines erfindungsgemäßen porösen. Sintergerüstkörpers beträgt etwa 40 % der theoretischen Dichte $\rho_T$ des Vollmaterials. Das entspricht einer Porosität P von etwa 60 %. Die Porosität ist hier durch die Beziehung

$$P\,[\%] = 100 \left(1 - \frac{\rho_P}{\rho_T}\right)$$

definiert.

Der für das erfindungsgemäße Sintergerüst charakteristische kleine Porendurchmesser ($\bar{d} < 20\,\mu m$) ist deshalb von Vorteil, weil kleine Poren im Vergleich zu großvolumigen Poren eine erhöhte Masseausbeute erlauben, bedingt durch die überall vorhandene Nähe des Elektrolyten, in der allein die Reaktion abläuft. Eine große Entfernung vom Elektrolyten würde dagegen einen großen Ohm'schen Anteil an der Polarisation der Festkörperzelle bedingen, so daß die Masseausbeute oberhalb einer zu definierenden Abbruchspannung sehr gering sein kann.

Die gute mechanische Stabilität des Sintergerüsts gemäß der Erfindung trägt der notwendigen Manipulation an den Festelektrolytkörpern beim Einbringen der aktiven Elektrodensubstanz Rechnung.

Das Einbringen geschieht durch Eintränken schmelzbarer Verbindungen aus der Reihe $SbCl_3$, $SbBr_3$, $SbJ_3$, $PbJ_2$ für die Kathode oder der Alkalimetalle Li und Na für die Anode. Dabei ist wichtig, daß die Poren des Gerüstkörpers von der aktiven Substanz gut benetzt werden und daß ferner der Dampfdruck der aktiven Kathodensubstanzen nicht Werte erreicht, bei denen die Gefahr eines Angriffs auf die Alkalimetallelektrode und somit einer Entladung der Zelle über die Gasphase entsteht.

Bei Na/S-Batterien füllen sich die Gerüstporen von selbst mit flüssigem Schwefel bzw. flüssigem Schwefel-Natriumpolysulfid während des Aufheizens auf Betriebstemperatur.

Bedingt durch Unterschiede in der Kompatibilität der Alkalimetalle mit den erfindungsgemäß in Betracht kommenden Festkörperelektrolytmaterialien kann es notwendig sein, für das dem Alkalimetall unmittelbar anliegende Separatorteilstück ein anderes Festkörperelektrolytmaterial vorzusehen als für das poröse Gerüst. So ist beispielsweise bei Verwendung einer Li-Elektrode die Kombination von $Li_3N$ als Elektrolytseparator mit Li-β-Alumina in einem Sintercompound günstig, bei Verwendung einer Na-Elektrode sind der genannte 4-Komponenten-Mischkristall oder Na-β-Alumina, entweder einheitlich oder in einem Mischsintercompound zu bevorzugen.

Figur 1 zeigt eine galvanische Festkörperzelle gemäß der Erfindung.

Figur 2 zeigt eine modifizierte galvanische Festkörperzelle gemäß der Erfindung.

Figur 3 zeigt die Entladekurve einer erfindungsgemäßen $Na/SbCl_3$-Zelle.

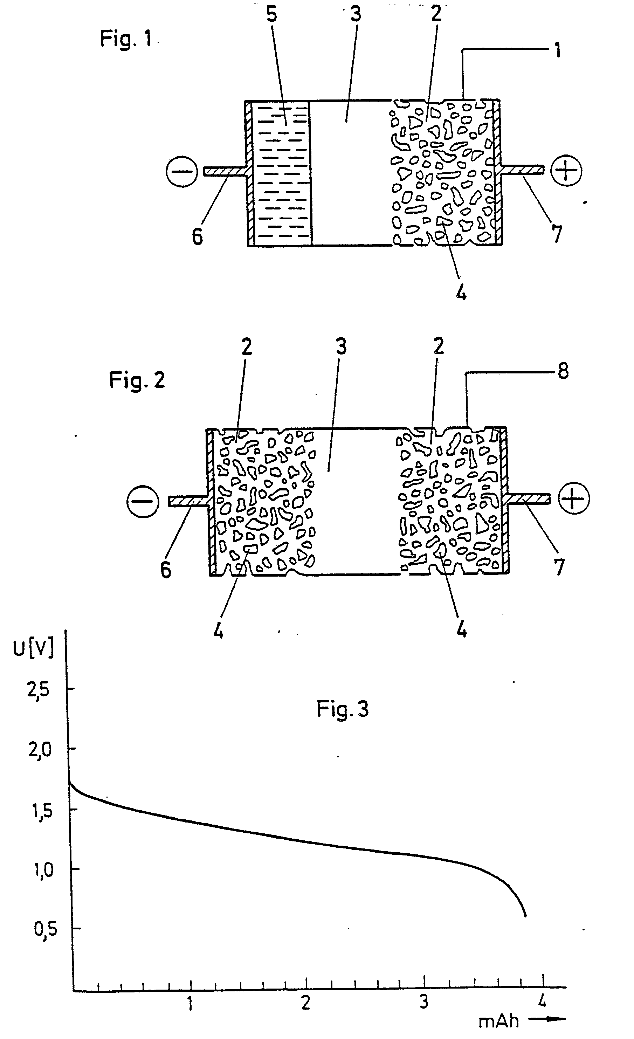

Gemäß Figur 1 sind in der Festkörperzelle 1 das den Kathodenraum umfassende poröse Festkörperelektrolytgerüst 2 und der nichtporöse Festkörperelektrolytseparator 3 zu einem einheitlichen Sintercompound verbunden. Die Gerüstporen 4 sind von schmelzbarem aktiven Kathodenmaterial, z. B. $SbCl_3$ ausgefüllt, während die negative Metallanode 5, z. B. Na, auf den massiven Separator 3 aufgeschmolzen ist. Die Anordnung wird an ihren Enden durch die beiden Stromableiter 6, 7 kontaktiert.

Gemäß Figur 2 ist der dreischichtige Sintercompound 8 auch im Anodenbereich mit einer porösen Gerüststruktur 2 präsent, wobei die Poren 4 auf dieser Seite das Alkalimetall enthalten. Die gesamte Zellenstruktur ist hier durch einen einzigen Formkörper vorgegeben, und der Vorteil einer solchen Anordnung liegt auf der Hand. Im übrigen arbeiten die hier dargestellten Zellen reversibel.

Die Entladung gemäß Figur 3 wurde mit einer $Na/SbCl_3$-Zelle durchgeführt, der ein Sintercompound nach Figur 1 aus dem Mischkristallmaterial $Na_{3,1}Zr_{1,55}Si_{2,3}P_{0,7}O_{11}$ zugrunde lag mit einer Porosität von 60 % in seinem Kathodenabschnitt. Der Entladewiderstand betrug 100 kΩ. Hierzu sei bemerkt, daß $SbCl_3$ in einer Zelle ohne jedes $Na^+$-leitende Gerüst überhaupt nicht entladbar ist und daß selbst ein der Kathodensubstanz in Pulverform untermischtes Festkörperelektrolytmaterial keine Entladung ermöglicht, wenn es nicht in erfindungsgemäßer Weise zu einer Gerüstform versintert ist.

Auf eine interessante Anwendung des Prinzips der erfindungsgemäßen Festkörperelektrolyt-Compoundsinterung sei noch hingewiesen. Sie gestattet nämlich, die Ionenleitfähigkeit eines porösen Körpers exakt zu messen, wenn dieser in einem Sinterkörper nach Art von Figur 2 den mittleren Abschnitt einnimmt, also eine inverse Anordnung massiv-porös-massiv zwischen den Stromableitern vorliegt. Mit einer derartigen Meßzelle (Diaphragmenzelle) wird nämlich eine definierte Kontaktierung zu den Meßelektroden erreicht, die sich in der bisherigen Praxis nicht herstellen ließ. Die Abmessungen einer solchen Meßzelle, die auch für erfindungsgemäße Festkörperzellen gelten, liegen im Bereich von einigen Millimetern.

Die erwähnte Meßzelle ist sowohl für Gleichstrom- als auch für Wechselstrommeßmethoden geeignet. Zur Bestimmung der Leitfähigkeit des porösen Abschnitts ist es lediglich notwendig, vom gemessenen Gesamtwiderstand die separat zu berechnenden Widerstände der massiven Teile zu subtrahieren. Einem Impedanzspektrum für das poröse Mischkristallmaterial kann man bei einer Porosität $P = 60\%$ eine $Na^+$-Ionenleitfähigkeit $\sigma = 10^{-4}\Omega^{-1}\ cm^{-1}$ entnehmen.

Diese hohe Leitfähigkeit bei erfindungsgemäßen porösen Festkörperelektrolyten, wobei $\sigma_p : \sigma_{massiv} \sim 1 : 10$, sowie deren hoher Porositätsgrad stellen denkbar günstige Voraussetzungen für die Incorporierung von aktiven Elektrodensubstanzen dar.

## Patentansprüche

1. Galvanisches Element mit einem Festkörperelektrolyten, einer negativen Alkalimetallelektrode und einer positiven Elektrode, dadurch gekennzeichnet, daß der Festkörperelektrolyt in mindestens einer Elektrode ein selbsttragendes poröses Sintergerüst (2) bildet.

2. Galvanisches Element nach Anspruch 1, dadurch gekennzeichnet, daß die ein Festkörperelektrolytgerüst enthaltende Elektrode die positive Elektrode ist.

3. Galvanisches Element nach den Ansprüchen 1 und 2, dadurch gekennzeichnet, daß das Festkörperelektrolytgerüst der Elektrode mit einem nichtporösen Festkörperelektrolytmaterial als Separator (3) homogen versintert ist.

4. Galvanisches Element nach einem der Ansprüche 1 bis 3, dadurch gekennzeichnet, daß das Festkörperelektrolytmaterial ein Mischkristall aus den Komponenten des quaternären Systems $Na_2O$—$ZrO_2$—$SiO_2$—$P_2O_5$ ist.

5. Galvanisches Element nach einem der Ansprüche 1 bis 3, dadurch gekennzeichnet, daß das Festkörperelektrolytmaterial $Li_2O \cdot 11\ Al_2O_3$ (Li-β-Alumina), $Na_2O \cdot 11\ Al_2O_3$ (Na-β-Alumina) oder $Li_3N$ ist.

6. Galvanisches Element nach einem der Ansprüche 1 bis 5, dadurch gekennzeichnet, daß die negative Elektrode (5) eine Li- oder Na-Elektrode ist.

7. Galvanisches Element nach einem der Ansprüche 1 bis 6, dadurch gekennzeichnet, daß das aktive Material der positiven Elektrode eine schmelzbare Verbindung aus der Reihe $SbCl_3$, $SbBr_3$, $SbJ_3$, $PbJ_2$ ist.

8. Galvanisches Element nach einem der Ansprüche 1 bis 6 dadurch gekennzeichnet, daß das aktive Material der positiven Elektrode Schwefel ist.

9. Verfahren zur Herstellung eines galvanischen Elements mit einem Festkörperelektrolyten, einer negativen Alkalimetallelektrode und einer positiven Elektrode, nach einem oder mehreren der Ansprüche 1 bis 8, dadurch gekennzeichnet, daß feinpulvriges Festelektrolytmaterial mit einer feingemahlenen Fillersubstanz vermischt und verpreßt wird, daß die Fillersubstanz durch Sintern rückstandsfrei verflüchtigt wird und daß in das so entstandene poröse Festkörperelektrolyt-Sintergerüst schmelzflüssiges aktives Elektrodenmaterial eingebracht wird.

10. Verfahren nach Anspruch 9, dadurch gekennzeichnet, daß ein zweischichtiger Preßling aus einer Schicht aus Festelektrolytmaterial und Fillersubstanz und einer Schicht aus reinem Festelektrolytpulver geformt, gesintert und mit aktiver Masse versehen wird.

11. Verfahren nach Anspruch 10, dadurch gekennzeichnet, daß ein dreischichtiger Preßling aus einer mittleren Schicht aus reinem Festelektrolytpulver und äußeren Schichten aus Festelektrolytmaterial und Fillersubstanz geformt, gesintert und mit aktiven Massen versehen wird.

12. Verfahren nach einem der Ansprüche 9 bis 11, dadurch gekennzeichnet, daß die Fillersubstanz eine rückstandsfreie zu verflüchtigende Kohlenstoffverbindung ist.

13. Verfahren nach den Ansprüchen 9 und 12, dadurch gekennzeichnet, daß die Verflüchtigung der Fillersubstanz unterhalb der Sintertemperatur erfolgt.

14. Verfahren nach den Ansprüchen 10 bis 12, dadurch gekennzeichnet, daß die Verflüchtigung der Fillersubstanz oberhalb der Sintertemperatur erfolgt.

## Claims

1. A galvanic cell with a solid-state electrolyte, a negative alkali metal electrode and a positive electrode, characterized in that the solid-state electrolyte forms a self-supporting porous sintering support (2) in at least one electrode.

2. A galvanic cell according to Claim 1, characterized in that the electrode comprising a solid-state electrolyte support is the positive electrode.

3. A galvanic cell according to Claims 1 and 2, characterized in that the solid-state electrolyte support of the electrode is homogeneously sintered with a non-porous solid-state electrolyte material as a separator (3).

4. A galvanic cell according to any one of Claims 1 to 3, characterized in that the solid-state electrolyte materials is a mixed crystal of the components of the quaternary system $Na_2O$—$ZrO_2$—$SiO_2$—$P_2O_5$.

5. A galvanic cell according to any one of Claims 1 to 3, characterized in that the solid-state electrolyte material is $Li_2O \cdot 11\ Al_3O_3$ (Li-β-alumina), $Na_2O \cdot 11\ Al_2O_3$ (Na-β-alumina), or $Li_3N$.

6. A galvanic cell according to any one of Claims 1 to 5, characterized in that the negative electrode (5) is an Li- or Na-electrode.

7. A galvanic cell according to any one of Claims 1 to 6, characterized in that the active material of the positive electrode is a fusible compound from the series $SbCl_3$, $SbBr_3$, $SbI_3$, $PbI_2$.

8. A galvanic cell according to any one of Claims 1 to 6, characterized in that the active material of the positive electrode is sulphur.

9. A method of producing a galvanic cell with a solid-state electrolyte, a negative alkali metal electrode and a positive electrode, according to one or more of Claims 1 to 8, characterized in that finely powdered solid electrolyte material with a finely ground filler substance is mixed and pressed, the filler substance is volatilized without residue by sintering and fused active electrode material is added to the porous solid electrolyte sintering support produced in this way.

10. A method according to Claim 9, characterized in that a two-layered pressed article having one layer of solid electrode material and filler substance and one layer of pure solid electrolyte powder is moulded, sintered and provided with active mass.

11. A method according to Claim 10, characterized in that a three-layered pressed article having a central layer of pure solid electrolyte powder and outer layers of solid electrolyte material and filler substance is moulded, sintered and provided with active masses.

12. A method according to any one of Claims 9 to 11, characterized in that the filler substance is a residue-free carbon compound to be volatilized.

13. A method according to Claims 9 and 12, characterized in that the filler substance is volatilized below the sintering temperature.

14. A method according to any one of Claims 10 to 12, characterized in that the filler substance is volatilized above the sintering temperature.

## Revendications

1. Elément galvanique avec un électrolyte solide, une électrode négative en métal alcalin et une électrode positive, élément caractérisé en ce que l'électrolyte solide constitue, sur au moins une électrode, une structure frittée poreuse autoporteuse (2).

2. Elément galvanique selon la revendication 1, caractérisé en ce que l'électrode comportant une structure d'électrolyte solide est l'électrode positive.

3. Elément galvanique selon les revendications 1 et 2, caractérisé en ce que la structure d'électrolyte solide de l'électrode est frittée de façon homogène avec un matériau d'électrolyte solide non poreux jouant le rôle de séparateur (3).

4. Elément galvanique selon une des revendications 1 à 3, caractérisé en ce que le matériau d'électrolyte solide est un cristal mixte constitué des composants du système quaternaire $Na_2O$—$ZrO_2$—$SiO_2$—$P_2O_5$.

5. Elément galvanique selon une des revendications 1 à 3, caractérisé en ce que le matériau d'électrolyte solide est du $Li_2O \cdot 11\ Al_2O_3$ (Li-β-Alumine), $Na_2O \cdot 11\ Al_2O_3$ (Na-β-Alumine) ou bien $Li_3N$.

6. Elément galvanique selon une des revendications 1 à 5, caractérisé en ce que l'électrode négative (5) est une électrode Li ou bien Na.

7. Elément galvanique selon une des revendications 1 à 6, caractérisé en ce que le matériau actif de l'électrode positive est une combinaison fusible de la série $SbCl_3$, $SbBr_3$, $SbJ_3$, $PbJ_2$.

8. Elément galvanique selon une des revendications 1 à 6, caractérisé en ce que le matériau actif de l'électrode positive est du soufre.

9. Procédé pour la réalisation d'un élément galvanique avec un électrolyte solide, une électrode négative en métal alcalin et une électrode positive, selon une ou plusieurs des revendications 1 à 8, procédé caractérisé en ce que du matériau d'électrolyte solide en poudre fine est mélangé avec une substance de remplissage finement moulue et comprimée, que la substance de remplissage est volatilisée sans résidu par frittage et que dans la structure frittée poreuse d'électrolyte solide ainsi obtenu, un matériau actif d'électrode liquéfié par fusion est incorporé.

10. Procédé selon la revendication 9, caractérisé en ce qu'une ébauche de pressage à deux couches constituée d'une couche de matériau d'électrolyte solide et de substances de remplissage et d'une couche de poudre d'électrolyte solide pure est moulée, frittée et garnie de masses actives.

11. Procédé selon la revendication 10, caractérisé en ce qu'une ébauche de pressage à trois couches constituée d'une couche médiane de poudre d'électrolyte solide pure et de couches externes de matériau d'électrolyte solide et de substances de remplissage, est moulée, frittée et garnie de masses actives.

12. Procédé selon une des revendications 9 à 11, caractérisé en ce que la substance de remplissage est un composé carboné pouvant être volatilisé sans résidu.

13. Procédé selon les revendications 9 et 12 caractérisé en ce que la volatilisation de la substance de remplissage s'effectue au-dessous de la température de frittage.

14. Procédé selon les revendications 10 à 12, caractérisé en ce que la volatilisation de la substance de remplissage s'effectue au-dessus de la température de frittage.

0 070 958

Fig. 1

Fig. 2

Fig. 3